## Europäisches Patentamt

## European Patent Office

## Office européen des brevets

(19)

(11)  **EP 0 955 092 B1**

(12)  **FASCICULE DE BREVET EUROPEEN**

(45) Date de publication et mention
de la délivrance du brevet:
**15.06.2005 Bulletin 2005/24**

(51) Int Cl.$^7$: **B01J 29/10**, B01J 29/16,
C10G 47/20

(21) Numéro de dépôt: **99400974.4**

(22) Date de dépôt: **21.04.1999**

(54) **Catalyseur à base de zeolithe y non globalement désaluminée, de bore et/ou de silicium et procédé d'hydrocraquage**

Katalysator auf Basis von nicht gesamt entaluminierten Y-Zeolith, Bor und/oder Silicium und Verfahren zum Hydrocracken

Catalyst based on y zeolite not totally dealuminated, boron and/or silicium and process for hydrocracking

(84) Etats contractants désignés:
**DE ES IT NL**

(30) Priorité: **06.05.1998 FR 9805735**

(43) Date de publication de la demande:
**10.11.1999 Bulletin 1999/45**

(73) Titulaire: **Institut Français du Pétrole**
**92852 Rueil-Malmaison Cedex (FR)**

(72) Inventeurs:
• **George-Marchal, Nathalie**
**69230 Saint Genis Laval (FR)**
• **Mignard, Samuel**
**78400 Chatou (FR)**
• **Kasztelan, Slavik**
**92500 Rueil Malmaison (FR)**

(56) Documents cités:
**EP-A- 0 372 632**          **US-A- 4 036 739**
**US-A- 4 517 073**          **US-A- 5 525 209**

## Description

La présente invention concerne un catalyseur d'hydrocraquage de charges hydrocarbonées, ledit catalyseur comprenant au moins un métal choisi parmi le groupe VIB et le groupe VIII (groupe 6 et groupes 8, 9 et 10 selon la nouvelle notation de la classification périodique des éléments : Handbook of Chemistry and Physics, 76ième édition, 1995-1996), de préférence le molybdène et le tungstène, le cobalt, le nickel et le fer, associés à un support comprenant une matrice alumine poreuse amorphe ou mal cristallisée et une zéolithe Y non désaluminée de paramètre cristallin supérieur à 2,438 nm. La matrice alumine du catalyseur renfermant du bore et du silicium au moins un élément du groupe VIIB, et éventuellement phosphore, et éventuellement au moins un élément du groupe VIIA (groupe 17 des halogènes) et notamment le fluor.

La présente invention concerne également les procédés de préparation du dit catalyseur, ainsi que son utilisation pour l'hydrocraquage de charges hydrocarbonées telles que les coupes pétrolières et les coupes issues du charbon contenant du soufre et de l'azote sous la forme de composés organiques, les dites charges contenant éventuellement des métaux et/ou de l'oxygène.

L'hydrocraquage conventionnel de coupes pétrolières est un procédé très important du raffinage qui permet de produire, à partir de charges hydrocarbonées lourdes excédentaires des fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité.

Les catalyseurs utilisés en hydrocraquage conventionnel sont tous du type bifonctionnels associant une fonction acide à une fonction hydrogénante. La fonction acide est apportée par des supports de grandes surfaces (150 à 800 m2.g-1 généralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VIB de la classification périodique tels que chrome, molybdène et tungstène et au moins un métal du groupe VIII de préférence non noble.

L'équilibre entre la fonction acide et la fonction hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse volumique d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. Par ailleurs, une fonction acide faible est moins sensible à la désactivation, en particulier par les composés azotés, qu'une fonction acide forte. Le problème qui se pose est donc de choisir judicieusement chacune des fonctions afin d'ajuster le couple activité/sélectivité du catalyseur.

Les supports d'acidité faible sont constitués généralement d'oxydes amorphes ou mal cristallisés. Dans les supports d'acidité faible, on trouve la famille des silice-alumines amorphes. Certains catalyseurs du marché de l'hydrocraquage sont constitués de silice-alumine associée à une association de sulfures des métaux des groupes VIB et VIII. Ces catalyseurs permettent de traiter des charges ayant des teneurs en poisons hétéroatomiques, soufre et azote, élevées. Ces catalyseurs ont une très bonne sélectivité en distillats moyens, ils sont très résistant à de forte teneur en azote et les produits formés sont de bonne qualité. L'inconvénient de ces systèmes catalytiques à base de support amorphe est leur faible activité.

Les supports ayant une acidité forte contiennent généralement une zéolithe désaluminée, par exemple de type Y désaluminée ou USY (Ultra Stable Y zeolite), associée à un liant, par exemple l'alumine. Certains catalyseurs du marché de l'hydrocraquage sont constitués de zéolithe Y désaluminée et d'alumine associée, soit à un métal du groupe VIII soit, à une association de sulfures des métaux des groupes VIB et VIII. Ces catalyseurs sont de préférence employés pour traiter des charges dont les teneurs en poisons hétéroatomiques, soufre et azote, sont inférieure à 0,01 % en poids. Ces systèmes sont très actifs et les produits formés sont de bonne qualité. L'inconvénient de ces systèmes catalytiques à base de support zéolithique est une sélectivité en distillats moyens un peu moins bonne que les catalyseurs à base de support amorphe et une très grande sensibilité à la teneur en azote. Ces catalyseurs ne peuvent supporter que des teneurs en azote faible dans la charge, en général moins de 100 ppm en poids.

La demanderesse à découvert que pour obtenir un catalyseur d'hydrocraquage ayant un bon niveau d'activité et une bonne stabilité sur des charges à forte teneur en azote, il est avantageux d'associer une matrice oxyde amorphe acide de type alumine dopée par de bore et de silicium, et éventuellement par le phosphore et éventuellement au moins un élément du groupe VIIA et notamment le fluor à une zéolithe Y non désaluminée globalement très acide et à au moins un elément du groupe VIIB.

Par zéolithe non désaluminée globalement on entend une zéolithe Y de structure faujasite (Zeolite Molecular Sieves Structure, Chemistry and Uses, D.W. BRECK, J. WILLEY and Sons 1973). Le paramètre cristallin de cette zéolithe peut avoir diminué par extraction des aluminiums de la structure ou charpente lors de la préparation mais le rapport Si02/A1203 global n'a pas changé car les aluminiums n'ont pas été extraits chimiquement des cristaux de zéolithe. Les cristaux de zéolithe contiennent donc l'aluminium extrait de la charpente sous la forme d'aluminium extra-réseau. Une telle zéolithe non désaluminée globalement a donc une composition en silicium et aluminium exprimée par le rapport SiO2/Al2O3 global équivalent à la zéolithe Y non désaluminée de départ. Cette zéolithe Y non désaluminée globalement peut être sous la forme hydrogène soit être au moins partiellement échangée avec des cations métalliques, par exemple à l'aide de cations des métaux alcalino-terreux et/ou des cations de métaux de terres rares de numéro atomique 57 à 71 inclus

Le catalyseur de la présente invention renferme généralement en % poids par rapport à la masse totale du catalyseur au moins un métal choisi dans les groupes suivants et avec les teneurs suivantes :

- 0,1 à 30% d'au moins un métal du groupe VIII et/ou 1-40 % d'au moins un métal du groupe VIB (% oxyde),

- 1 à 99,7%, de préférence de 10 à 98% et de manière encore plus préférée de 15 à 95% d'au moins une matrice alumine amorphe ou mal cristallisée,

- 0,1 à 80%, ou encore de 0,1 à 60% et de préférence de 0,1-50% d'au moins d'une zéolithe Y non désaluminée globalement de paramètre cristallin supérieur à 2,438 nm, de rapport molaire SiO2/Al2O3 global inférieur à 8, de rapport molaire SiO2/Al2O3 de charpente calculé d'après la corrélation dite de Fichtner-Schmittler (dans Cryst. Res. Tech. 1984, 19, K1) inférieur à 21 et supérieur au SiO2/Al2O3 global.

- 0,1 à 20%, de préférence de 0,1 à 15% et de manière encore plus préférée de 0,1 à 10% de bore et de silicium (% oxyde),

et éventuellement,

- 0 à 20%, de préférence de 0,1 à 15% et de manière encore plus préférée de 0,1 à 10% poids de phosphore (% oxyde),

- 0 à 20%, de préférence de 0,1 à 15% et de manière encore plus préférée de 0,1 à 10% poids d'au moins un élément choisi dans le groupe VIIA, de préférence le fluor.

- 0,1 à 20%, de préférence de 0,1 à 15% et de manière encore plus préférée de 0,1 à 10% poids d'au moins un élément choisi dans le groupe VIIB, de préférence le manganèse ou encore le rhénium.

Les catalyseurs obtenus par la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) supérieure à 140 m2/g, un volume poreux mesuré par porosimétrie au mercure compris entre 0,2 et 1,5 cm3/g et une distribution en taille de pores pouvant être monomodale, bimodale ou polymodale. De manière préférée les catalyseurs de la présente invention ont une distribution des pores monomodale.

Ledit catalyseur présente une activité en hydrocraquage des coupes de type gazole sous vide plus importante que les formules catalytiques connues dans l'art antérieur. Sans vouloir être lié par une quelconque théorie, il semble que cette activité particulièrement élevée des catalyseurs de la présente invention est due d'une part aux renforcement de l'acidité du catalyseur par la présence d'une matrice alumine acidifiée par l'ajout de bore et/ou de silicium, ce qui induit également une amélioration des propriétés hydrodéazotante de la phase active comprenant au moins un métal du groupe VIB et éventuellement au moins un métal du groupe VIII et d'autre part par la présence de la zéolithe Y très acide dont une bonne partie de l'acidité sera neutralisée par les composés azotés mais dont les sites acides restant dans les conditions opératoires donneront une activité en hydrocraquage suffisante au catalyseur.

Le catalyseur de la présente invention peut être préparé par toutes les méthodes bien connues de l'homme du métier.

Avantageusement, il est obtenu par mélange d'une source d'alumine éventuellement dopée par le bore et/ou le silicium et d'une source de zéolithe Y de départ, ledit mélange étant ensuite mis en forme. Les éléments des groupes VIII et/ou VIB, du groupe VIIA et le phosphore sont introduits en totalité ou en partie lors du mélange, ou encore en totalité après mise en forme (préféré). La mise en forme est suivie d'une calcination à une température de 250 à 600°C. Une des méthodes préférées de mise en forme dans la présente invention consiste à malaxer la zéolithe Y de départ dans un gel humide d'alumine pendant quelques dizaines de minutes, puis à passer la pâte ainsi obtenue à travers une filière pour former des extrudés de diamètre compris de préférence entre 0,4 et 4 mm.

La source d'alumine est habituellement choisie dans le groupe formé par les gels d'alumine et les poudres d'alumines obtenues par calcination d'hydroxydes et d'oxyhydroxydes d'aluminium. On préfère utiliser des matrices contenant de l'alumine, sous toutes ces formes connues de l'Homme du métier, par exemple l'alumine gamma.

La source de zéolithe Y préférée est une poudre de zéolithe Y non désaluminée sous forme hydrogène caractérisée par différentes spécifications : un paramètre cristallin supérieur à 2,451 nm; un rapport molaire $SiO_2/Al_2O_3$ global inférieur à 8, un rapport molaire $SiO_2/Al_2O_3$ de charpente calculé d'après la corrélation dite de Fichtner-Schmittler (dans Cryst. Res. Tech. 1984, 19, K1) inférieur à 11 ; une teneur en sodium inférieure à 0,2% poids déterminée sur la zéolithe calcinée à 1100°C; une surface spécifique déterminée par la méthode B.E.T. supérieure à environ 400 m2/g et de préférence supérieure à 600 m2/g.

Le catalyseur renferme en outre une fonction hydrogénante. La fonction hydrogénante est assurée par au moins un métal ou composé de métal du groupe VIB tels que le molybdène et le tungstène notamment. On peut utiliser une combinaison d'au moins un métal ou composé de métal du groupe VIB (notamment le molybdène ou le tungstène) et d'au moins un métal ou composé de métal du groupe VIII de préférence non noble (notamment le cobalt ou le nickel) de la classification périodique des éléments.

La fonction hydrogénante telle qu'elle a été définie précédemment peut être introduite dans le catalyseur à divers niveaux de la préparation et de diverses manières. Elle peut être introduite en partie seulement (cas, par exemple, des associations d'oxydes de métaux des groupes VIB et VIII) ou en totalité au moment du malaxage de la source d'alumine, le reste des élément(s) hydrogénant(s) étant alors introduit après malaxage, et plus généralement après calcination. De façon préférée, le métal du groupe VIII est introduit simultanément ou après le métal du groupe VIB, quel que soit le mode d'introduction. Elle peut être introduite par une ou plusieurs opérations d'échange ionique sur le support calciné constitué de la zéolithe dispersée dans la matrice alumine, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin être introduite par une ou plusieurs opérations d'imprégnation du support calciné constitué de la zéolithe et de la matrice alumine éventuellement dopée par B, Si, P et/ou F, par des solutions contenant les précurseurs des oxydes de métaux des groupes VIB et/ou VIII. les précurseurs des oxydes de métaux de groupe VIII étant de préférence introduits après ceux du groupe VIB ou en même temps que ces derniers.

Dans le cas où les éléments sont introduits en plusieurs imprégnations des sels précurseurs correspondants, une étape de calcination intermédiaire du catalyseur devra être effectuée à une température comprise entre 250 et 600 °C.

Les sources d'élément du groupe VIB qui peuvent être utilisées sont bien connues de l'homme du métier. Par exemple, parmi les sources de molybdène et de tungstène on utilise de préférence les oxydes et les sels d'ammonium tels que le molybdate d'ammonium, l'heptamolybdate d'ammonium et le tungstate d'ammonium.

Les sources d'élément du groupe VIII qui peuvent être utilisées sont bien connues de l'homme du métier. Par exemple, on utilisera les nitrates, les sulfates, les halogénures.

Les sources d'élément du groupe VIIB qui peuvent être utilisées sont bien connues de l'homme du métier. On utilise de préférence les sels d'ammonium, les nitrates et les chlorures.

L'introduction du phosphore dans le catalyseur peut être réalisée à divers niveaux de la préparation et de diverses manières. Une méthode préférée selon l'invention consiste à préparer une solution aqueuse d'au moins un élément du groupe VIB et éventuellement d'au moins un élément du groupe VIII et d'un composé du phosphore et à procéder à une imprégnation dite à sec, dans laquelle on remplit le volume des pores du précurseur par la solution contenant le métal du groupe VIB, éventuellement le métal du groupe VIII, le phosphore et éventuellement l'élément du groupe VIIA.

L'imprégnation du molybdène et/ou du tungstène peut être facilitée par ajout d'acide phosphorique dans les solutions, ce qui permet d'introduire aussi le phosphore de façon à promouvoir l'activité catalytique. D'autres composés du phosphore peuvent être utilisés comme il est bien connu de l'homme du métier.

Le phosphore et l'élément choisi parmi les ions halogénures du groupe VIIA, peuvent être introduits par une ou plusieurs opérations d'imprégnation avec excès de solution sur le précurseur calciné. La source de phosphore préférée est l'acide orthophosphorique $H_3PO_4$, mais ses sels et esters comme les phosphates d'ammonium conviennent également. L'acide phosphomolybdique et ses sels, l'acide phosphotungstique et ses sels peuvent également être avantageusement employés. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

L'introduction du bore nécessite de disposer d'une solution aqueuse contenant du bore (B). Une méthode préférée selon l'invention consiste à préparer une solution aqueuse d'au moins un sel de bore tel que le biborate d'ammonium ou le pentaborate d'ammonium en milieu alcalin et en présence d'eau et à procéder à une imprégnation dite à sec, dans laquelle on rempli le volume des pores du précurseur par la solution contenant le B. Cette méthode de dépôt du B est meilleure que la méthode conventionnelle employant une solution alcoolique d'acide borique.

Le B et éventuellement l'élément choisi dans le groupe VIIA des ions halogénures, de préférence le fluor (F), peuvent être introduits dans le catalyseur à divers niveaux de la préparation et de diverses manières.

Le phosphore (P), B et l'élément choisi parmi les ions halogénures du groupe VIIA, peuvent être introduits séparément par une ou plusieurs opérations d'imprégnation avec excès de solution sur le précurseur calciné.

Ainsi, par exemple dans le cas préféré où par exemple le précurseur est un catalyseur de type nickel-molybdène-phosphore supporté sur alumine-zéolithe Y, il est possible d'imprégner ce précurseur par de la solution aqueuse de biborate, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

L'introduction du silicium nécessite de disposer d'une solution aqueuse contenant du silicium. Une méthode préférée selon l'invention consiste à préparer une solution aqueuse contenant un composé du silicium (Si) de type silicone sous la forme d'une émulsion et à procéder à une imprégnation dite à sec, dans laquelle on rempli le volume des pores du précurseur par la solution contenant le Si. Cette méthode de dépôt du Si est meilleure que la méthode conventionnelle employant une solution alcoolique d'orthosilicate d'éthyle dans l'alcool.

De nombreuses sources de silicium peuvent être employées. Ainsi, on peut utiliser l'orthosilicate d'éthyle Si(OEt)4, les silicones, les siloxanes, les polysiloxanes, les silicates d'halogénures comme le fluorosilicate d'ammonium (NH4)2SiF6 ou le fluorosilicate de sodium Na2SiF6. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'une émulsion de silicone dans l'eau.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH4)2SiF6, le tétrafluorure de silicium SiF4 ou de sodium Na2SiF6. Le fluor peut être introduit par exemple par imprégnation d'une solution aqueuse d'acide fluorhydrique ou de fluorure d'ammonium.

Les catalyseurs ainsi obtenus sont utilisés pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C. Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Enfin, du fait de la composition du catalyseur, celui-ci est facilement régénérable.

Le catalyseur peut être utilisé dans des conditions variables d'hydrocraquage avec des pressions d'au moins 2 MPa, une température de réaction d'au moins 230°C, un rapport H2/charge d'au moins 100 NI H2/l de charge et une vitesse volumique horaire de 0,1-10h-1.

Les charges hydrocarbonées traitées ont des points d'ébullition initiaux d'au moins 150°C, de préférence au moins 350°C, et plus avantageusement c'est une coupe bouillant entre 350-580°C.

Le catalyseur de la présente invention peut être employé pour l'hydrocraquage de diverses coupes hydrocarbonées, par exemple de coupes de type distillats sous vide fortement chargée en soufre et azote. Dans un premier mode d'hydrocraquage partiel le niveau de conversion est inférieur à 55%. Le catalyseur selon l'invention est alors employé à une température en général supérieure ou égale à 230°C ou à 300°C, généralement d'au plus 480°C, et souvent comprise entre 350°C et 450°C. La pression est en général supérieure à 2MPa et inférieure ou égale à 12 MPa. Une plage de pression modérée est particulièrement intéressante, qui est de 7,5-11 MPa, de préférence de 7,5-10 MPa ou encore 8-11MPa et avantageusement de 8,5-10 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10h-1. Dans ces conditions, les catalyseurs de la présente invention présentent une meilleure activité en conversion, en hydrodésulfuration et en hydrodéazotation que les catalyseurs commerciaux.

Dans ce mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction d'hydrotraitement est assurée par au moins un métal ou composé de métal du groupe VIII tels que le nickel et le cobalt notamment. On peut utiliser une combinaison d'au moins un métal ou composé de métal du groupe VIB (notamment le molybdène ou le tungstène) et d'au moins un métal ou composé de métal du groupe VIII (notamment le cobalt ou le nickel) de la classification périodique des éléments. La concentration totale en oxydes de métaux des groupes VIB et VIII est comprise entre 5 et 40 % en poids et de préférence entre 7 et 30 % en poids et le rapport pondéral exprimé en oxyde métallique en métal (ou métaux) du groupe VIB sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0,1 et 15 % en poids et de préférence comprise entre 0,15 et 10% en poids. Il peut également contenir du bore dans un rapport $B/P = 1,05$ - 2 (atomique), la somme des teneurs en B et P exprimée en oxydes étant de 5-15 % poids.

La première étape se déroule généralement à une température de 350-460°C, de préférence 360-450°C, une pression totale 2 à 12MPa; et de préférence de 7,5-11 MPa, 7,5-10 MPa ou 8-11 MPa ou 8,5-10 MPa, une vitesse volumique horaire de 0,1-5h-1 et de préférence 0,2-2h-1 et avec une quantité d'hydrogène d'au moins 100N1/N1 de charge, et de préférence 260-3000N1/N1 de charge.

Pour l'étape de conversion avec le catalyseur selon l'invention (ou seconde étape), les températures sont en général supérieures ou égales à 230°C et souvent comprises entre 300°C et 430°C. La pression est en général comprise entre 2 et 12 MPa de préférence de 7,5-11 MPa ou 7,5-10 MPa ou 8-11 MPa ou 8,5-10 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h-1.

Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est améliorée dans la plage de pression modérée.

Dans un second mode de réalisation, le catalyseur de la présente invention peut être employé pour l'hydrocraquage dans des conditions de pression d'hydrogène élevées d'au moins 8,5 MPa, de préférence au moins 9 MPa ou au moins 10 MPa. Les coupes traitées sont par exemple de type distillats sous vide fortement chargée en soufre et azote qui ont été préalablement hydrotraitées. Dans ce mode d'hydrocraquage le niveau de conversion est supérieur ou égal à 55%. Dans ce cas, le procédé de conversion de coupe pétrolière se déroule en deux étapes, le catalyseur selon l'invention étant utilisé dans la deuxième étape.

Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VIB (notamment le molybdène ou le tungstène) et d'au moins un métal ou composé de métal du groupe VIII (notamment le cobalt ou le nickel) de la classification périodique des éléments. La concentration totale en oxydes de métaux des groupes VIB et VIII est comprise entre 5 et 40 % en poids et de préférence entre 7 et 30 % en poids et le rapport pondéral exprimé en oxyde métallique en métal (ou métaux) du groupe VIB sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore P2O5 sera d'au plus 15% généralement, de préférence comprise entre 0,1 et 15 % en poids et de préférence comprise entre 0,15 et 10% en poids. Il peut également contenir du bore dans un rapport B/P = 1,02-2 (atomique), la somme des teneurs en B et P exprimée en oxydes étant de 5-15 % poids.

La première étape se déroule généralement à une température de 350-460°C, de préférence 360-450°C, une pression supérieure à 8,5 MPa, et de préférence supérieure à 10 MPa, une vitesse volumique horaire de 0.1-5h-1 et de préférence 0,2-2h-1 et avec une quantité d'hydrogène d'au moins 100Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 430°C. La pression est en général supérieure à 8,5 MPa et de préférence supérieure à 10 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h-1.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Les exemples suivants illustrent la présente invention sans toutefois en limiter la portée.

## Exemple 1

### Préparation d'un support contenant une zéolithe Y non désaluminée

Un support de catalyseur d'hydrocraquage contenant une zéolithe Y non globalement désaluminée a été fabriqué en grande quantité de façon à pouvoir préparer différents catalyseurs à base du même support. Pour cela on utilise 19,7 % poids d'une zéolithe Y non désaluminée de paramètre cristallin égal à 2,453 nm et de rapport SiO2/Al2O3 global de 6,6 et de rapport SiO2/Al2O3 de charpente de 8,6, que l'on mélange à 80,3 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 351 m2/g, un volume poreux de 0,58 cm3/g et une distribution en taille de pore monomodale centrée sur 10 nm. L'analyse de la matrice par la diffraction des rayons X révèle que celle ci est composée d'alumine gamma cubique de faible cristallinité et de zéolithe Y de paramètre de maille 2,444 nm et de rapport SiO2/Al2O3 global de 6,7 et de rapport SiO2/Al2O3 de charpente de 13,9.

## Exemple 2

### Préparation de catalyseurs d'hydrocraquage contenant une zéolithe Y non désaluminée

Les extrudés de support contenant une zéolithe Y non désaluminée de paramètre cristallin égal à 2,444 nm et rapport SiO2/Al2O3 global de 6,7 et de rapport SiO2/Al2O3 de charpente de 13,9 de l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ3 obtenus sont indiquées dans le tableau 1. Le catalyseur CZ3 final contient en particulier 16,6 % poids de zéolithe Y. L'analyse de la matrice par la diffraction des rayons X révèle que celle ci est composée d'alumine gamma cubique de faible cristallinité et de zéolithe Y de paramètre de maille 2,444 nm et de rapport SiO2/Al2O3 global de 6,6 et de rapport SiO2/Al2O3 de charpente de 14,2.

Le catalyseur CZ3 a ensuite été imprégné par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ3B : NiMo/alumine-Y dopé au bore. De la même manière, on prépare un catalyseur CZ3Si par imprégnation du catalyseur CZ3 par une émulsion de silicone Rhodorsil EP1 (Rhone-Poulenc). Les extrudés imprégnés sont ensuite séchés pendant une nuit à 120°C puis calcinés à 550°C pendant 2 heures sous air sec. Enfin, un catalyseur CZ3BSi a été obtenu imprégnation du catalyseur CZ3 par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec.

Les extrudés de support contenant une zéolithe Y de l'exemple 1 sont également imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur CZ3P obtenus sont indiquées dans le tableau 1. Le catalyseur CZ3P final contient en particulier 15,7 % % poids de zéolithe Y. L'analyse de la matrice par la diffraction des rayons X révèle que celle ci est composée d'alumine gamma cubique de faible cristallinité et de zéolithe Y de de paramètre de maille 2,444 nm et de rapport $SiO_2/Al_2O_3$ global de 6,7 et de rapport $SiO_2/Al_2O_3$ de charpente de 14,7.

Nous avons imprégné l'échantillon de catalyseur CZ3P par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ3PB : NiMoP/alumine-Y dopé au bore.

Un catalyseur CZ3PSi a été obtenu par la même procédure que le catalyseur CZ3PB ci-dessus mais en remplaçant dans la solution d'imprégnation le précurseur de bore par l'émulsion de silicone Rhodorsil EP1 (Rhone-Poulenc).

Enfin, un catalyseur CZ3PBSi a été obtenu imprégnation du catalyseur CZ3P par une solution aqueuse renfermant le biborate d'ammonium et l'émulsion de silicone Rhodorsil EP1(Rhone-Poulenc). Les autres étapes de la procédure sont les mêmes que celles indiquées ci dessus. Les caractéristiques des catalyseurs CZ3 sont résumées dans le tableau 1.

Tableau 1 :

| Caractéristiques des catalyseurs CZ3 | | | | | | | | |
|---|---|---|---|---|---|---|---|---|
| Catalyseur | CZ3 | CZ3 P | CZ3 B | CZ3 Si | CZ3 BSi | CZ3 PB | CZ3 PSi | CZ3 PBSi |
| MoO3 (% pds) | 13,1 | 12,5 | 12,8 | 12,8 | 12,5 | 12,3 | 12,3 | 12,1 |
| NiO (% pds) | 2,84 | 2,7 | 2,8 | 2,8 | 2,7 | 2,7 | 2,7 | 2,6 |
| P2O5 (% pds) | 0 | 5,2 | 0 | 0 | 0 | 5,1 | 5,1 | 5,0 |
| B2O3 (% pds) | 0 | 0 | 2,45 | 0 | 2,4 | 2,3 | 0 | 2,3 |
| SiO2 (% pds) | 0 | 0 | 0 | 2,2 | 2,2 | 0 | 2,3 | 2,2 |
| Al2O3 (% pds) | 67,5 | 63,8 | 65,8 | 66,0 | 64,4 | 62,3 | 62,3 | 60,9 |
| Y (%pds) | 16,6 | 15,7 | 16,1 | 16,2 | 15,8 | 15,3 | 15,3 | 14,9 |

**Exemple 3**

**Préparation d'un support contenant une faible quantité de zéolithe Y non désaluminée**

Un support de catalyseur d'hydrocraquage contenant une faible quantité de zéolithe Y non globalement désaluminée a été fabriqué en grande quantité de façon à pouvoir préparer différents catalyseurs à base du même support. Pour cela on utilise 8,6 % poids d'une zéolithe Y non désaluminée de paramètre cristallin égal à 2,453 nm et rapport $SiO_2/Al_2O_3$ global de 6,6 et de rapport $SiO_2/Al_2O_3$ de charpente de 8,6, que l'on mélange à 91,4 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 259 m2/g, un volume poreux de 0,57 cm3/g et une distribution en taille de pore monomodale centrée sur 10 nm. L'analyse de la matrice par la diffraction des rayons X révèle que celle ci est composée d'alumine gamma cubique de faible cristallinité et de zéolithe Y de paramètre de maille 2,444 nm et de rapport $SiO_2/Al_2O_3$ global de 6,7 et de rapport $SiO_2/Al_2O_3$ de charpente de 14,1.

**Exemple 4**

**Préparation de catalyseurs contenant une faible quantité de zéolithe Y non désaluminée**

Les extrudés de support contenant une faible quantité de zéolithe Y non désaluminée de paramètre cristallin égal à 2,444 nm et rapport SiO2/Al2O3 global de 6,7 et de rapport SiO2/Al2O3 de charpente de 14,1 de l'exemple 3 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ5 obtenus sont indiquées dans le tableau 2. Le catalyseur CZ5 final contient en particulier 7,1 % poids de zéolithe Y de paramètre de maille 2,443nm et de rapport SiO2/Al2O3 global de 6,8 et de rapport SiO2/Al2O3 de charpente de 14,9.

Le catalyseur CZ5 a ensuite été imprégné par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ5B. De la même manière, on prépérae un catalyseur CZ5Si par imprégnation du catalyseur CZ5 par une émulsion de silicone Rhodorsil EP1 (Rhone-Poulenc). Les extrudés imprégnés sont ensuite séchés pendant une nuit à 120°C puis calcinés à 550°C pendant 2 heures sous air sec. Enfin, un catalyseur CZSBSi a été obtenu imprégnation du catalyseur CZ5 par une solution aqueuse renfermant le biborate d'ammonium et l'émulsion de silicone Rhodorsil EPI (Rhone-Poulenc). Les extrudés imprégnés sont alors séchés pendant une nuit à 120°C puis calcinés à 550°C pendant 2 heures sous air sec.

Les extrudés de support contenant une zéolithe Y de l'exemple 3 sont également imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur CZ5P obtenus sont indiquées dans le tableau 2.

Nous avons imprégné l'échantillon de catalyseur CZ5P par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ5PB : NiMoP/alumine-Y dopée au bore.

Un catalyseur CZ5PSi a été obtenu par la même procédure que le catalyseur CZ5PB ci-dessus mais en remplaçant dans la solution d'imprégnation le précurseur de bore par l'émulsion de silicone Rhodorsil EP1 (Rhone-Poulenc).

Enfin, un catalyseur CZ5PBSi a été obtenu imprégnation du catalyseur par une solution aqueuse renfermant le biborate d'ammonium et l'émulsion de silicone Rhodorsil EP1(Rhone-Poulenc). Les autres étapes de la procédure sont les mêmes que celles indiquées ci dessus. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ5PBSiF. Les caractéristiques des catalyseurs CZ5 sont résumées dans le tableau 2.

Tableau 2 :

| Caractéristiques des catalyseurs CZ5 | | | | | | | | |
|---|---|---|---|---|---|---|---|---|
| Catalyseur | CZ5 | CZ5 P | CZ5 B | CZ5 Si | CZ5 BSi | CZ5 PB | CZ5 PSi | CZ5 PBSi | CZ5 PBSi F |
| MoO3 (% pds) | 15,2 | 14,6 | 14,8 | 14,9 | 14,5 | 14,3 | 14,3 | 14,0 | 13.7 |
| NiO (% pds) | 2,8 | 2,7 | 2,7 | 2,7 | 2,7 | 2,7 | 2,6 | 2,6 | 2,5 |
| P2O5 (% pds) | 0 | 4,6 | 0 | 0 | 0 | 4,5 | 4,5 | 4,4 | 4,35 |
| B2O3 (% pds) | 0 | 0 | 2,3 | 0 | 2,3 | 2,1 | 0 | 2,1 | 2,1 |
| SiO2 (% pds) | 0 | 0 | 0 | 2,1 | 2,2 | 0 | 2,45 | 2,3 | 2,3 |
| F (%pds) | 0 | 0 | 0 | 0 | 0 | 0 | 0 | 0 | 1.1 |
| Al2O3 (% pds) | 74,9 | 71,4 | 73,2 | 73,4 | 71,5 | 69,8 | 69,6 | 68,1 | 67.5 |
| Y (%pds) | 7,1 | 6,7 | 6,9 | 6,9 | 6,7 | 6,6 | 6,6 | 6,4 | 6,4 |

Le catalyseur CZ5P a ensuite été imprégné par une solution aqueuse renfermant du nitrate de manganèse. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ5PMn. On imprègne ensuite ce catalyseur par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec et on obtient le catalyseur CZ5PMnBSi. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ5PMnBSiF. Les teneurs pondérales de ces catalyseurs sont indiquées dans le tableau 3.

Tableau 3 :

| Caractéristiques des catalyseurs CZ5 contenant du manganèse | | | |
|---|---|---|---|
| Catalyseur | CZ5 PMn | CZ5 PMn BSi | CZ5 PMn BSiF |
| $MoO_3$ (% pds) | 14,4 | 13,8 | 13,6 |
| NiO (% pds) | 2,7 | 2,5 | 2,5 |
| $MnO_2$ (% pds) | 1,2 | 1,2 | 1,15 |
| $P_2O_5$ (% pds) | 4,4 | 4,2 | 4,1 |
| $B_2O_3$ (% pds) | 0 | 2,3 | 2,3 |
| $SiO_2$ (% pds) | 0 | 2,05 | 2,0 |
| F (%pds) | 0 | 0 | 0,85 |
| $Al_2O_3$ | 70,7 | 67,6 | 67,0 |
| Y (%pds) | 6,6 | 6,4 | 6,3 |

### Exemple 5

### Préparation d'un support contenant une zéolithe Y non désaluminée et une silice-alumine

Nous avons fabriqué une poudre de silice-alumine par coprécitation ayant une composition de 4% $SiO_2$, 96% $Al_2O_3$. Un support de catalyseur d'hydrocraquage contenant cette silice-alumine et une zéolithe Y non globalement désaluminée a été ensuite fabriqué. Pour cela on utilise 19,5 % poids d'une zéolithe Y non désaluminée de paramètre cristallin égal à 2,453 nm et de rapport $SiO_2/Al_2O_3$ global de 6,6 et de rapport $SiO_2/Al_2O_3$ de charpente de 8,6, que l'on mélange à 80,5 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 365 m2/g, un volume poreux de 0,53 cm3/g et une distribution en taille de pore monomodale centrée sur 11 nm. L'analyse de la matrice par la diffraction des rayons X révèle que celle ci est composée d'alumine gamma cubique de faible cristallinité et de zéolithe Y de paramètre de maille 2,444 nm et de rapport $SiO_2/Al_2O_3$ global de 6,8 et de rapport $SiO_2/Al_2O_3$ de charpente de 14,7.

### Exemple 6

### Préparation de catalyseurs contenant une zéolithe Y non désaluminée et une silice-alumine

Les extrudés de support contenant une silice-alumine et une zéolithe Y non désaluminée de paramètre cristallin égal à 2,444 nm et rapport $SiO_2/Al_2O_3$ global de 6,8 et de rapport $SiO_2/Al_2O_3$ de charpente de 14,7 de l'exemple 5 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ17 obtenus sont indiquées dans le tableau 1. Le catalyseur CZ17 final contient en particulier 16,3 % poids de zéolithe Y. L'analyse de la matrice par la diffraction des rayons X révèle que celle ci est composée d'alumine gamma cubique de faible cristallinité et de zéolithe Y de paramètre de maille 2,444 nm et de rapport $SiO_2/Al_2O_3$ global de 6,6 et de rapport $SiO_2/Al_2O_3$ de charpente de 14,2.
Le catalyseur CZ17 a ensuite été imprégné par une solution aqueuse renfermant du biborate d'ammonium.

Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ17B.

Les extrudés de support contenant une zéolithe Y de l'exemple 1 sont également imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur CZ17P obtenus sont indiquées dans le tableau 4. Le catalyseur CZ17P final contient en particulier 15,4 % % poids de zéolithe Y. L'analyse de la matrice par la diffraction des rayons X révèle que celle ci est composée d'alumine gamma cubique de faible cristallinité et de zéolithe Y de de paramètre de maille 2,444 nm et de rapport SiO2/Al2O3 global de 6,7 et de rapport SiO2/Al2O3 de charpente de 14,7.

Nous avons imprégné l'échantillon de catalyseur CZ17P par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ17PB.

Les caractéristiques des catalyseurs CZ17 sont résumées dans le tableau 4.

Tableau 4 :

| Caractéristiques des catalyseurs CZ17 | | | | |
|---|---|---|---|---|
| Catalyseur | CZ17 | CZ17 P | CZ17 B | CZ17 PB |
| MoO3 (% pds) | 13,4 | 12,7 | 13,1 | 12,5 |
| NiO (% pds) | 2,9 | 2,8 | 2,9 | 2,7 |
| P2O5 (% pds) | 0 | 5,3 | 0 | 5,2 |
| B2O3 (% pds) | 0 | 0 | 2,15 | 2,2 |
| SiO2 (% pds) | 2,68 | 2,53 | 2,6 | 2,5 |
| Al2O3 (% pds) | 64,7 | 61,2 | 63,8 | 59,8 |
| Y (%pds) | 16,3 | 15,4 | 15,9 | 15,1 |

**Exemple 7 : Comparaison des catalyseurs en hydrocraquage d'un gazole sous vide à basse pression.**

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| point initial | 365°C |
| point 10 % | 430°C |
| point 50 % | 472°C |
| point 90 % | 504°C |
| point final | 539°C |
| point d'écoulement | + 39°C |
| densité (20/4) | 0,921 |
| Soufre (% poids) | 2,46 |
| Azote (ppm poids) | 1130 |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HTH548 vendu par la société Procatalyse comprenant un élément du groupe VIB et un élément du groupe VIII déposés sur alumine. Dans le second réacteur, celui dans lequel la charge passe en dernier, on introduit le catalyseur d'hydrocraquage (série CZ5). Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée. La pression totale est de 8,5 MPa, le débit d'hydrogène est de 500 litres d'hydrogène gazeux par litre de charge injectée, la vitesse volumique horaire est de 0,8 h-1. Les deux réacteurs fonctionnement à la même température.

Les performances catalytiques sont exprimées par la conversion brute à 400°C (CB), par la sélectivité brute en distillats moyens (coupe 150-380°C) (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

CB = % pds de 380°C- de l'effluent

La sélectivité brute SB est prise égale à :

SB = 100*poids de la fraction (150°C-380°C)/poids de la fraction 380°C- de l'effluent

La conversion en hydrodésulfuration HDS est prise égale à :

HDS = (Sinitial - Seffluent) / Sinitial * 100 = (24600 - Seffluent) / 24600 * 100

La conversion en hydrodéazotation HDN est prise égale à :

HDN = (Ninitial - Neffluent) / Ninitial * 100 = (1130 - Neffluent) / 1130 * 100

Dans le tableau 5 suivant, nous avons reporté la conversion brute CB à 400°C, la sélectivité brute SB, la conversion en hydrodésulfuration HDS et la conversion en hydrodéazotation HDN pour les catalyseurs de l'invention qui ont été testé.

Tableau 5 :

| Activités catalytiques des catalyseurs en hydrocraquage partiel à 400°C | | | | | |
|---|---|---|---|---|---|
| | | CB (%pds) | SB (%) | HDS (%) | HDN (%) |
| CZ3 | NiMo/Y | 50.9 | 79.8 | 98.9 | 97.1 |
| CZ3P | NiMoP/Y | 52.2 | 79.0 | 99.4 | 98.4 |
| CZ3B | NiMoB/Y | 53.3 | 79.1 | 99.4 | 98.4 |
| CZ3Si | NiMoSi/Y | 54.3 | 79.3 | 99.4 | 98.6 |
| CZ3BSi | NiMoBSi/Y | 54.9 | 79.5 | 99.5 | 98.8 |
| CZ3PB | NiMoPB/Y | 53.5 | 79.0 | 99.3 | 98.5 |
| CZ3PSi | NiMoPSi/Y | 53.9 | 79.0 | 99.25 | 98.5 |
| CZ3PBSi | NiMoPBSi/Y | 54.8 | 78.9 | 99.4 | 98.9 |

Les résultats du tableau 5 montrent que les performances du catalyseur CZ3 sont grandement améliorées lorsque l'on ajoute du B et du silicium. On note en particulier une amélioration de la conversion brute tout en gardant un niveau de sélectivité en distillats moyens constant. Par ailleurs la présence du bore et de silicium donne une nette tendance à l'amélioration de l'HDS et de l'HDN.

Tableau 6 :

| Activités catalytiques des catalyseurs CZ3 et CZ17 de composition équivalentes en hydrocraquage partiel à 400°C | | | | | |
|---|---|---|---|---|---|
| | | CB (%pds) | SB (%) | HDS (%) | HDN (%) |
| CZ17 | NiMo/Y-SiAl | 53.3 | 78.9 | 97.8 | 97.1 |
| CZ3Si | NiMoSi/Y | 54.3 | 79.3 | 99.4 | 98.6 |

Tableau 6 :   (suite)

| Activités catalytiques des catalyseurs CZ3 et CZ17 de composition équivalentes en hydrocraquage partiel à 400°C | | | | | |
|---|---|---|---|---|---|
| | | CB (%pds) | SB (%) | HDS (%) | HDN (%) |
| CZ17P | NiMoP/Y-SiAl | 53.2 | 79.1 | 98.25 | 97.5 |
| CZ3PSi | NiMoPSi/Y | 53.9 | 79.0 | 99.25 | 98.5 |
| CZ17B | NiMoB/Y-SiAl | 53.7 | 79.1 | 98.3 | 97.1 |
| CZ3BSi | NiMoBSi/Y | 54.9 | 79.5 | 99.5 | 98.8 |
| CZ17PB | NiMoPB/Y-SiAl | 53.8 | 78.7 | 98.1 | 97.7 |
| CZ3PBSi | NiMoPBSi/Y | 54.8 | 78.9 | 99.4 | 98.9 |

Les résultats du tableau 6 montrent qu'il est avantageux d'introduire le silicium sur le catalyseur déjà préparé plutot que sous la forme d'un support conteant du silicium obtenu à partir d'une silice-alumine. Ceci se vérifie que le catalyseur contienne du phosphore ou non. Il est donc particulièrement avantageux d'introduire le silicium sur un précurseur contenant déjà les éléments du groupe VIB et/ou VIII et éventuellment au moins l'un des éléments P, B et F. Les catalyseurs contenant une alumine acidifiée par le bore et/ou le silicium et une zéolithe non désaluminée globalement sont donc particulièrement intéressants pour l'hydrocraquage partiel de charge de type distillats sous vide contenant de l'azote à une pression d'hydrogène modérée.

**Exemple 8 : Comparaison des catalyseurs en hydrocraquage d'un gazole sous vide à pression plus élevée**

Les catalyseurs dont les préparations sont décrites dans les exemples 3 et 4 précédents sont utilisés dans les conditions de l'hydrocraquage à pression élevée (12 MPa) sur une charge pétrolière dont les principales caractéristiques sont les suivantes :

| | |
|---|---|
| point initial | 277 °C |
| point 10 % | 381 °C |
| point 50 % | 482 °C |
| point 90 % | 531 °C |
| point final | 545 °C |
| point d'écoulement | + 39 °C |
| densité (20/4) | 0.919 |
| Soufre (% poids) | 2.46 |
| Azote (ppm poids) | 930 |

L'unité de test catalytique comprend deux réacteurs en lit fixe, à circulation ascendante de la charge ("upflow"). Dans chacun des réacteurs, on introduit 40ml de catalyseur. Dans le premier réacteur, celui dans lequel la charge passe en premier, on introduit le catalyseur de première étape d'hydrotraitement HR360 vendu par la société Procatalyse comprenant un élément du groupe VIB et un élément du groupe VIII déposés sur alumine. Dans le second réacteur, celui dans lequel la charge passe en dernier, on introduit le catalyseur de deuxième étape c'est-à-dire le catalyseur d'hydroconversion (série CZ5). Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée. La pression totale est de 12 MPa, le débit d'hydrogène est de 1000 litres d'hydrogène gazeux par litre de charge injectée, la vitesse volumique horaire est de 0,9h-1.

Les performances catalytiques sont exprimées par la température qui permet d'atteindre un niveau de conversion brute de 70 % et par la sélectivité brute en distillats moyen (coupe 150°C-380°C). Ces performances catalytiques sont mesurées sur le catalyseur après qu'une période de stabilisation, généralement au moins 48 heures, ait été respectée.

La conversion brute CB est prise égale à:

CB = % pds de 380°C- de l'effluent

La sélectivité brute SB est prise égale à :

SB = 100*poids de la fraction (150°C-380°C)/poids de la fraction 380°C- de l'effluent La température de réaction est fixée de façon à atteindre une conversion brute CB égale à 70% poids. Dans le tableau 7 suivant, nous avons reporté la température de réaction et la sélectivité brute pour les catalyseurs de la série CZ5.

Tableau 7 :

| Activités catalytiques des catalyseurs CZ5 en hydrocraquage | | | |
|---|---|---|---|
| | | T (°C) | SB (%) |
| CZ5 | NiMo/Y | 396 | 71 |
| CZ5P | NiMoP/Y | 395 | 71.4 |
| CZ5B | NiMoB/Y | 395 | 71.5 |
| CZ5Si | NiMoSi/Y | 395 | 71.5 |
| CZ5BSi | NiMoBSi/Y | 394 | 71.8 |
| CZ5PB | NiMoPB/Y | 395 | 71.2 |
| CZ5PSi | NiMoPSi/Y | 394 | 71.5 |
| CZ5PBSi | NiMoPBSi/Y | 393 | 71.4 |
| CZ5PBSiF | NiMoPBSiF/Y | 391 | 70.9 |
| CZ5PMn | NiMoPMn/Y | 394 | 71.2 |
| CZ5PMnBSi | NiMoPMnBSi/Y | 393 | 71.3 |
| CZ5PMnBSiF | NiMoPMnBSiF/Y | 390 | 71.2 |

L'addition du bore et du silicium sur le catalyseur contenant la zéolithe non désaluminée globalement permet de conserver la sélectivité trés élevée du catalyseur CZ5 tout en ayant une température de réaction plus basse puisqu'un gain de température de 3°C est observé par rapport au catalyseur CZ5PBSi. De plus, si l'on ajoute du manganèse et/ou du fluor on constate également une amélioration de l'activité convertissante sans dégradation de la sélectivité brute en distillats moyens.

**Revendications**

1.  Catalyseur comprenant :

    .   0,1-99,7 % poids d'au moins une matrice alumine,

    .   0,1-80 % poids d'au moins une zéolithe Y non globalement désaluminée, de paramètre cristallin supérieur à 2,438 nm, de rapport molaire SiO2/Al2O3 global inférieur à 8, de rapport molaire SiO2/Al2O3 de charpente inférieur à 21 et supérieur au rapport molaire SiO2/Al2O3 global,

    .   0,1-30 % poids d'au moins un métal du groupe VIII et/ou 1-40 % poids d'au moins un métal du groupe VIB (% oxyde), .

    .   0,1-20 % poids de bore et de silicium comme éléments promoteurs déposés sur le catalyseur (% oxyde),

    .   0-20 % poids d'au moins un élément du groupe VIIA,

    .   0-20 % poids de phosphore (% oxyde),

    .   0,1-20 % poids d'au moins un élément du groupe VIIB.

2.  Catalyseur selon la revendication 1, dont l'élément du groupe VIIA est le fluor.

3. Catalyseur selon l'une des revendications précédentes dans lequel l'élément du groupe VIIB est le manganèse.

4. Procédé d'hydrocraquage avec un catalyseur selon l'une des revendications précédentes, à une pression d'au moins 2 MPa, une température d'au moins 230°C, une quantité d'hydrogène d'au moins 100Nl par litre de charge et une vitesse volumique horaire de 0,1-10h-1.

5. Procédé selon la revendication 4, dans lequel la pression est de 2-12 MPa, la température de 300-480°C et la conversion est inférieure à 55 %.

6. Procédé selon la revendication 5 dans lequel la pression est de 7,5-11 MPa.

7. Procédé selon la revendication 4, dans lequel la pression est d'au moins 8,5 MPa, la température de 300-430°C et la conversion d'au moins 55 %.

8. Procédé selon la revendication 5, dans lequel la charge est hydrotraitée préalablement à l'hydrocraquage.

9. Procédé selon la revendication 8, dans lequel le catalyseur d'hydrotraitement contient au moins un métal du groupe VIII, au moins un métal du groupe VIB et du phosphore et éventuellement du bore.

10. Procédé selon la revendication 5 dans lequel la pression est de 8-11 MPa.


**Patentansprüche**

1. Katalysator umfassend :

   a. 0,1-99,7 Gew.-% wenigstens einer Aluminiumoxidmatrix,

   b. 0,1-80 Gew.-% wenigstens eines nicht vollständig entaluminisierten Y-Zeolithen, von einem Kristallparameter größer als 2,438 nm, einem SiO2/Al2O3 Molgesamtverhältnis von weniger als 8, einem Molgitterverhältnis SiO2/Al2O3 kleiner 21 und größer als das Molgesamtverhältnis SiO2/Al2O3,

   c. 0,1-30 Gew.-% wenigstens eines Metalls der Gruppe VIII und/oder 1-40 Gew.-% wenigstens eines Metalls der Gruppe VIB (% Oxid),

   d. 0,1-20 Gew.-% Bor und Silicium als Promotorelemente, abgeschieden auf dem Katalysator (% Oxid),

   e. 0-20 Gew.-% wenigstens eines Elements der Gruppe VIIA,

   f. 0-20 Gew.-% Phosphor (% Oxid), und

   g. 0,1-20 Gew.-% wenigstens eines Elements der Gruppe VIIB.

2. Katalysator nach Anspruch 1, dessen Element der Gruppe VIIA Fluor ist.

3. Katalysator nach einem der vorhergehenden Ansprüche, bei dem das Element der Gruppe VIIB Mangan ist.

4. Hydrocrackverfahren mit einem Katalysator nach einem der vorhergehenden Ansprüche bei einem Druck von wenigstens 2 MPa, einer Temperatur von wenigstens 230°C, einer Wasserstoffmenge von wenigstens 100 Nl pro Liter Charge und einer stündlichen Volumengeschwindigkeit bzw. volumenbezogenen Geschwindigkeit von 0,1-10h-1.

5. Verfahren nach Anspruch 4, bei dem der Druck bei 2-12 MPa, die Temperatur bei 300-480°C und die Umwandlung unter 55 % liegt.

6. Verfahren nach Anspruch 5, bei dem der Druck bei 7,5-11 MPa liegt.

7. Verfahren nach Anspruch 4, bei dem der Druck bei wenigstens 8,5 MPa, die Temperatur bei 300-430°C und die Umwandlung bei wenigstens 55 % liegt.

**8.** Verfahren nach Anspruch 5, bei dem die Charge vor dem Hydrocracken im Hydrotreatmentverfahren behandelt wurde.

**9.** Verfahren nach Anspruch 8, bei dem der Hydrotreatmentkatalysator wenigstens ein Metall der Gruppe VIII, wenigstens ein Metall der Gruppe VIB und Phosphor sowie gegebenenfalls Bor enthält.

**10.** Verfahren nach Anspruch 5, bei dem der Druck bei 8-11 MPa liegt.

**Claims**

**1.** A catalyst comprising:

- 0.1-99.7% by weight of at least one alumina matrix;
- 0.1-80% by weight of at least one globally non dealuminated Y zeolite with a lattice parameter of more than 2.438 nm, a global $SiO_2/Al_2O_3$ mole ratio of less than 8, and a framework $SiO_2/Al_2O_3$ mole ratio of less than 21 and more than the global $SiO_2/Al_2O_3$ mole ratio;
- 0.1-30% by weight of at least one group VIII metal and/or 1-40% by weight of at least one group VIB metal (% oxide);
- 0.1-20% by weight of boron and silicon as promoter elements deposited on the catalyst (% oxide);
- 0-20% by weight of at least one group VIIA element;
- 0-20% by weight of phosphorous (% oxide);
- 0.1-20% by weight of at least one group VIIB element.

**2.** A catalyst according to claim 1, in which the group VIIA element is fluorine.

**3.** A catalyst according to any one of the preceding claims, in which the group VIIB element is manganese.

**4.** A hydrocracking process using a catalyst according to any one of the preceding claims, carried out at a pressure of at least 2 MPa, a temperature of at least 230°C, using a quantity of hydrogen of at least 100 N1 hydrogen/l of feed and with an hourly space velocity of 0.1-10 h$^{-1}$.

**5.** A process according to claim 4, in which the pressure is 2-12 MPa, the temperature is 300-480°C and the conversion is less than 55%.

**6.** A process according to claim 5, in which the pressure is 7.5-11 MPa.

**7.** A process according to claim 4, in which the pressure is at least 8.5 MPa, the temperature is 300-430°C and the conversion is at least 55%.

**8.** A process according to claim 5, in which the feed is hydrotreated prior to hydrocracking.

**9.** A process according to claim 8, in which the hydrotreatment catalyst contains at least one group VIII metal, at least one group VIB metal, phosphorous and optionally boron.

**10.** A process according to claim 5, in which the pressure is 8-11 MPa.